# EUROPEAN PATENT SPECIFICATION

(11) **EP 1 781 497 B1**
(45) Date of publication and mention of the grant of the patent: **20.08.2014**
(21) Application number: 05755040.2
(22) Date of filing: 01.07.2005
(51) Int. Cl.: B60R 9/06

(54) **DEVICE FOR UP AND DOWN TILTING OF A LOAD CARRIE ATTACHED AT A VEHICLE**
VORRICHTUNG ZUM AUF- UND ABKIPPEN EINER AN EINEM FAHRZEUG ANGEBRACHTEN LASTTRAGEVORRICHTUNG
DISPOSITIF D'INCLINAISON VERS LE HAUT ET VERS LE BAS D'UN PORTE-CHARGE FIXÉ SUR UN VÉHICULE

(30) Priority: 07.07.2004 SE 0401817
(43) Date of publication of application: 09.05.2007
(73) Proprietor: Thule Sweden AB, 330 33 Hillerstorp (SE)
(72) Inventor: FERMAN, Magnus, S-331 54 Värnamo (SE); RAGNARSSON, Magnus, S-331 41 Värnamo (SE)
(74) Representative: Valea AB
(86) International application number: PCT/SE2005/001051
(87) International publication number: WO 2006/004519

(56) References cited:
- EP-B1- 1 059 205
- DE-A1- 4 241 142
- DE-A1- 19 922 752
- DE-U1- 9 311 905
- DE-U1-202004 003 423
- GB-A- 2 425 997
- SE-C2- 522 911
- US-A- 4 400 129
- US-A- 5 842 615

## Description

The present invention refers to a device for making it possible to tilt a load carrier attached at a vehicle, which load carrier having a frame including a first part firmly connected with a coupling member for fastening at the vehicle, a pivoted second part movable connected with said first part, whereupon the second part includes means in order to carry load, and a gripping device arranged between said parts, which can be moved from a first engagement position, where the gripping device fasten said parts to each other, to a second position, where said parts can be rotated relatively each other.

Through SE 522 911 is a coupling device for a load carrier previously known. The previously known coupling device includes gripping members, which embrace a towing ball, whereupon a force is applied to clamp the gripping members together. Through adapting the force an intermediate position can be achieved where the friction against the towing ball is such that the coupling device remains in adjusted position, but is possible to twist around the ball by applying an external force. It becomes thus possible to tilt the coupling device together with the load carrier at a desired access to a luggage space of the vehicle. The previously known device has functioned satisfactorily, but it has sometime been experienced as difficult. Since the turning takes place around the towing ball, the whole load must follow during up and down tilting of the load carrier. Moreover, at wear of the towing ball it can be difficult to achieve sufficient friction against the ball. Another disadvantage with this solution and similar known solutions is that it can be difficult to access the devices that operate the gripping members when the load carrier carry load, such as several bicycles, a box or similar.

US 4,400,129 discloses a load carrier for external attachment to a vehicle according to the preamble of claim 1. The carrier comprises a support member for connection to the vehicle and a pivot member pivotally connected to the support member. A carrying device is attached to the pivot member. The pivot member has a handle at the distal end and in the proximity of the handle a lever. The lever is in working cooperation with a lock mechanism. Upon operating the loch mechanism, which extends throughout the pivot member, a user can operate the pivot member between a tilted position and an upraised position.

The purpose with the present invention is to increase the access to the devices that needs operating for up and down tilting of the load carrier, in particular when the load carrier carries load. Moreover the up and down tilting should be performed on a simple and controllable manner. The present invention overcomes the above stated disadvantages with a device according to claim 1.

The invention will from here on be described with reference to a preferred embodiment, as shown in the figures in which:

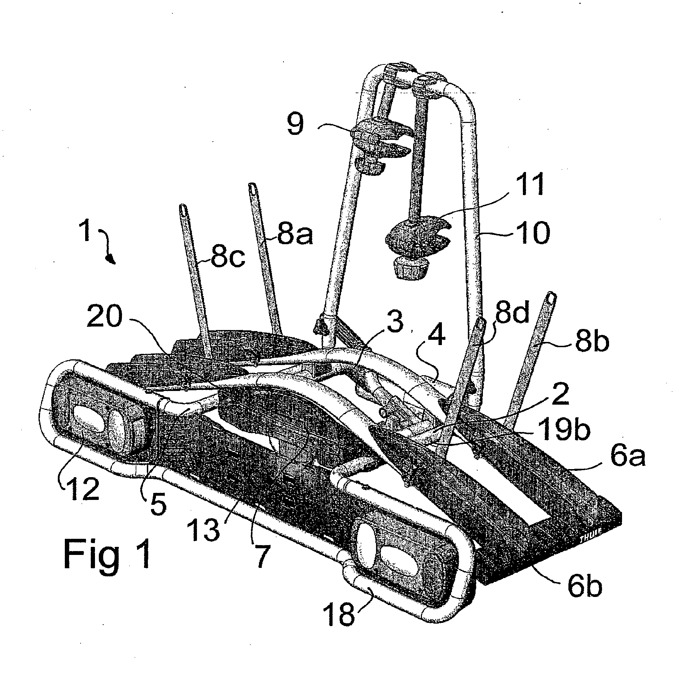

Fig. 1 is a view in perspectives of a load carrier according to the present invention.
Fig. 2 is a schematic view in cross-section of the load carrier in upright position.
Fig. 3 is a schematic view in cross-section of the load carrier in tilted position.
Fig. 4 is a magnified and partial cross-sectional view in perspectives of a part of the load carrier.

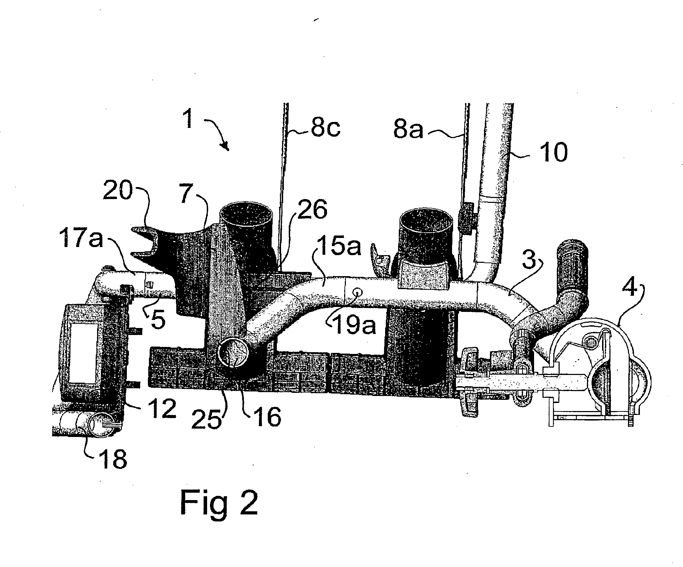

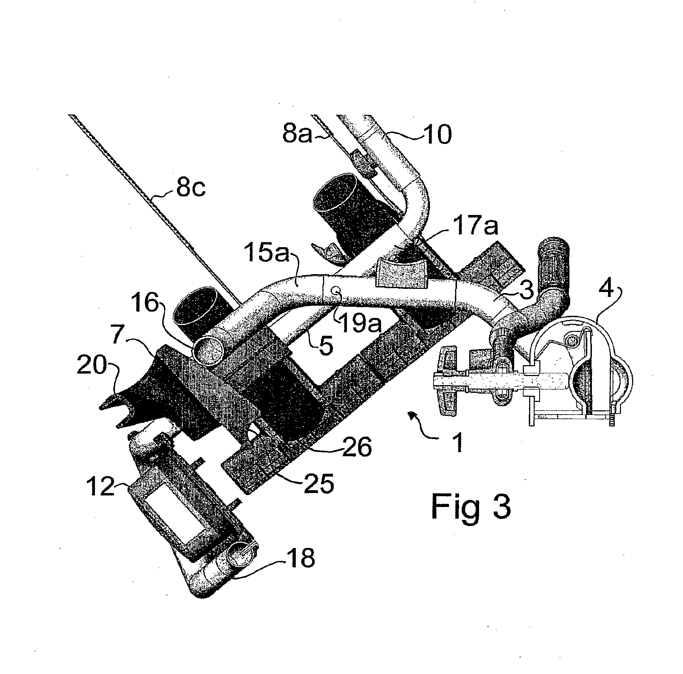

In the figures, a load carrier 1 is shown with a frame 2 including a first part 3 firmly connected with a coupling member 4 for fastening at the vehicle, a pivoted second part 5 movable connected with said first part, whereupon the second part includes holders 6 to carry load, and a gripping member 7 arranged between said parts 3 and 5, which can slide from a first engagement position, see figure 2, where the gripping member 7 fasten said parts 3 and 5 to each other, to a second position, see figure 3, where said parts 3 and 5 can be turned relatively each other.

The load carrier 1 is in the shown figures suitable to carry two bicycles, but the load carrier can of course be adopted for only one or several bicycles. The load carrier can also carry other loads, such as a box, a ski carrier or similar.

A first bicycle is placed on the inner arched holder 6a and is fixed with fastening members 8a and 8b, and a grabbing member 9, which is attached to an arc 10 that extend substantially perpendicular upwards from the second part 5 of the frame. Another bicycle is fixed in a corresponding way at the outer arched holder 6b with the aid of the fastening members 8c and 8d, and the grabbing member 11. Thus, the fastening members are attached 8 at the wheels of the bicycle (not shown) and the grabbing member 9 or 11 at the framework of the bicycle (not shown). The load carrier 1 also has an illumination panel 12, with fasteners 13 for a license plate (not shown).

The actual frame 2 and the arc 10 are preferably made of aluminum tubes with circular or other appropriate profile. The holders 6, the fastening members 8 and similar details are made of plastic. Of course, other choices of material are within the framework of present claims.

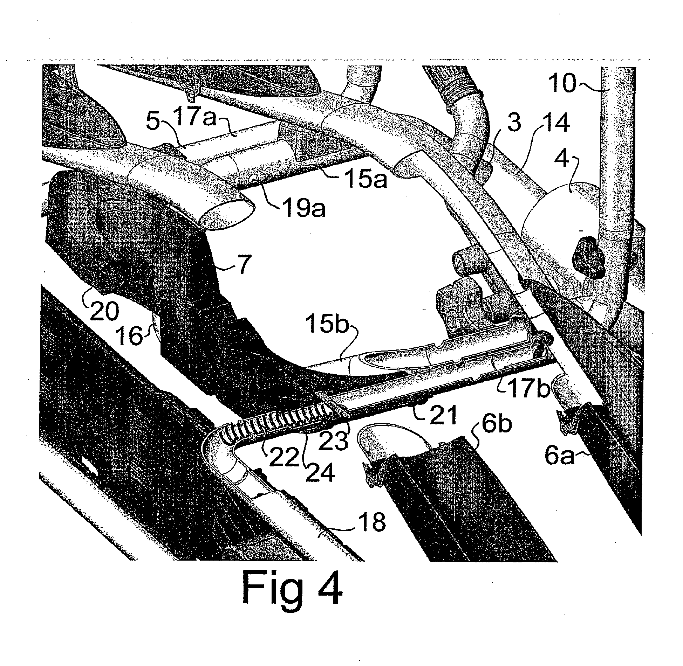

Figures 2 to 4 show more clearly how the first part 3 and-the second part 5 of the frame 2 are designed. The first part 3 is constituted of a substantially rectangular, arched framework, which at its inner side 14 is anchored at the coupling member 4 and extends out from this on a first low level, across an expected direction of travel. From the inner side 14 two parallel tubes 15a and 15b extend in shape of an arc up to a second upper level, along with an intended direction of travel. The two parallel tubes 15a and 15b is linked with an outer side 16, that extends on the low level, across an intended direction of travel. The second part 5 includes a framework comprising partly of two parallel tubes 17a and 17b, which in accordance with the invention, in upright position, runs in level with and next to the tubes 15a and 15b, and a framework 18 around the illumination panel 12 and the arc 10. The adjacent tubes 15a and 17a, and 15b and 17b, respectively, are pivoted to each other with the hinge 19a and 19b, respectively.

The gripping member 7 is designed with a handle 20 for operating of the gripping member, and extends partly between the two parallel tubes 17a and 17b, and between these tubes and the outer side 16 of the first part 3 of the frame. The gripping member 7 having a recess 21 , on each side of the gripping member, through which recesses 21 the two parallel tubes 17a and 17b runs. The gripping member 7 is thus slideable in expected direction of travel along the two parallel tubes 17a and 17b. Preferably, the two parallel tubes 17a and 17b include a spring 22 and a connecting member 23, in the form of a pin or similar, which connecting member 23 is anchored at the gripping member 7, and an extended groove 24 along the tube 17a and 17b, along which said connection member 23 runs freely. The gripping member 7 also having a recess 25, which substantially embrace the outer side 16 of the first part 3 of the frame.

At down tilting of the load carrier 1 the gripping member 7 is moved backward, against the intended travel direction of the vehicle, with the aid of the handle 20. The gripping member 7 slides thus backward along the tubes 17a and 17b and against the spring 22. Then, the recess is moved 25 from engagement with the outer side 16 of the first part 3 of the frame 2. The second part 5 of the frame 2, with possible load, will be turned downward around the hinges 19a and 19b, when the gripping member 7 no longer supports against the outer side 16 of the first part 3 of the frame 2. During turning substantially the whole load being carried by the gripping member 7, whereupon down tilting can take place in a simple and controllable manner.

At tilting upward of the load carrier 1 the gripping member 7 is lifted along with the load with the aid of the handle 20, whereupon an oblique surface 26 of the gripping member 7 abutting against the outer side 16 of the first part 3 of the frame 2 and pressing the gripping member 7 backward against the spring 22. When the recess 25 comes in level with the outer side 16 of the first part 3 of the frame 2, the spring force will press the recess 25 to engagement with said outer side 16. The spring 22 will also during travel with the vehicle maintain this engagement, whereupon the gripping member 7 together with the first part 3 of the frame 2 and the second part 5 form a framework, which keep the load carrier 1 in an upraised position.

## Claims

1. A load carrier (1) having a tilting arrangement and adapted to be attached to a vehicle, said load carrier (1) comprising a frame (2) including a first part (3) firmly connected with coupling means (4) for attachment to the vehicle, a second part (5) pivotally connected to said first part (3), wherein said second part (5) comprises means for carrying a load,
said tilting arrangement comprises a grip member (7) with a handle (20), the grip member (7) movably arranged to said second part (5) and arranged between said parts (3, 5),
said grip member (7) with said handle (20) is adapted to be displaced between a first engagement position, in which said grip member (7) fastens said first and second parts (3, 5) to each other, to a second position, at which said first and second parts (3, 5) are permitted to be pivoted relatively each other, enabling said grip member (7) to carry substantially the whole load so that tilting can be performed in a controllable manner when the grip member (7) is operated,
**characterized in that**
said second part (5) includes a framework consisting of at least two parallel tubes (17a, 17b), which in the upraised first engagement position, runs in level with said first part (3),
said grip member (7) extends partly between the two parallel tubes (17a, 17b), said grip member (7) has a recess (21) on each side of the grip member (7), through which recesses (21) the two parallel tubes (17a, 17b) run.

2. The load carrier (1) according to claim 1, **characterized in that** the first part (3) is constituted of a substantially rectangular, arched framework, which in its inner side (14) is anchored at the coupling means (4) and extends out from this on a first low level, across a first direction.

3. The load carrier (1) according to claim 2, **characterized in that** from the inner side (14) two parallel tubes (15a, 15b) extend in a curved arc up to a second upper level, along with said first direction.

4. The load carrier (1) according to claim 3, **characterized in that** the two parallel tubes (15a, 15b) are linked with an outer side (19), which extends on the low level, across said first direction.

5. The load carrier (1) according to claim 1, **characterized in that** said grip member (7) is slidable in said first direction along the two parallel tubes (17a, 17b).

6. The load carrier (1) according to claim 5, **characterized in that** the two parallel tubes (17a, 17b) include a spring (22) and connecting means (23), in the form of a pin or similar, which connecting means (23) is anchored at the gripping means (7).

7. The load carrier (1) according to claim 6, **characterized in that** said connection means (23) move freely along an extended groove (24) along with the tubes (17a, 17b).

8. The load carrier (1) according to claim 7, **characterized in that** the grip member (7) has a recess (25), which substantially embraces the outer side (16) of the first part (3) of the frame.

## Patentansprüche

1. Lasttragevorrichtung (1), die eine Kippanordnung aufweist und so ausgelegt ist, dass sie an einem Fahrzeug angebracht wird, wobei die Lasttragevorrichtung (1) einen Rahmen (2) umfasst, der ein erstes Teil (3), das fest mit einem Kopplungsmittel (4) zum Befestigen an dem Fahrzeug verbunden ist, ein zweites Teil (5) aufweist, das drehgelenkig mit dem ersten Teil (3) verbunden ist, wobei das zweite Teil (5) Mittel zum Tragen einer Last umfasst,
die Kippanordnung ein Greifelement (7) mit einem Griff (20) umfasst, wobei das Greifelement (7) beweglich an dem zweiten Teil (5) angeordnet und zwischen den Teilen (3, 5) angeordnet ist,
das Greifelement (7) mit dem Griff (20) so ausgelegt ist, dass es zwischen einer ersten Eingriffsposition, in der das Greifelement (7) das erste und zweite Teil (3, 5) aneinander befestigt, und einer zweiten Position umgelegt wird, in der sich das erste und zweite Teil (3, 5) bezogen aufeinander drehen können, wodurch ermöglicht wird, dass das Greifelement (7) im Wesentlichen die gesamte Last trägt, sodass das Kippen in einer kontrollierbaren Art und Weise erfolgen kann, wenn das Greifelement (7) betätigt wird,
**dadurch gekennzeichnet, dass**
das zweite Teil (5) eine Rahmenkonstruktion aufweist, die aus mindestens zwei parallelen Rohren (17a, 17b) besteht, die in der erhobenen ersten Eingriffsposition auf einer Höhe mit dem ersten Teil (3) verläuft,
das Greifelement (7) teilweise zwischen den beiden parallelen Rohren (17a, 17b) verläuft, das Greifelement (7) eine Vertiefung (21) auf jeder Seite des Greifelements (7) aufweist, wobei durch die Vertiefungen (21) die beiden parallelen Rohre (17a, 17b) laufen.

2. Lasttragevorrichtung (1) nach Anspruch 1, **dadurch gekennzeichnet, dass** das erste Teil (3) aus einer im Wesentlichen rechteckigen, gebogenen Rahmenkonstruktion gebildet ist, die an ihrer Innenseite (14) an dem Kopplungsmittel (4) verankert ist und auf einer ersten niedrigen Ebene quer über eine erste Richtung von dort aus nach außen verläuft.

3. Lasttragevorrichtung (1) nach Anspruch 2, **dadurch gekennzeichnet, dass** von der Innenseite (14) aus zwei parallele Rohre (15a, 15b) in einem gekrümmten Bogen zusammen mit der ersten Richtung nach oben auf eine zweite höhere Ebene verlaufen.

4. Lasttragevorrichtung (1) nach Anspruch 3, **dadurch gekennzeichnet, dass** die beiden parallelen Rohre (15a, 15b) mit einer Außenseite (16) verbunden sind, die auf der niedrigen Ebene quer über die erste Richtung verläuft.

5. Lasttragevorrichtung (1) nach Anspruch 1, **dadurch gekennzeichnet, dass** das Greifelement (7) in der ersten Richtung entlang der beiden parallelen Rohre (17a, 17b) verschiebbar ist.

6. Lasttragevorrichtung (1) nach Anspruch 5, **dadurch gekennzeichnet, dass** die beiden parallelen Rohre (17a, 17b) eine Feder (22) und ein Verbindungsmittel (23) in Form eines Stifts oder Ähnlichem aufweisen, wobei das Verbindungsmittel (23) an dem Greifmittel (7) verankert ist.

7. Lasttragevorrichtung (1) nach Anspruch 6, **dadurch gekennzeichnet, dass** sich das Verbindungsmittel (23) frei entlang einer breiten Nut (24) entlang den Rohren (17a, 17b) bewegt.

8. Lasttragevorrichtung (1) nach Anspruch 7, **dadurch gekennzeichnet, dass** das Greifelement (7) eine Vertiefung (25) aufweist, die im Wesentlichen die Außenseite (16) des ersten Teils (3) des Rahmens umschließt.

## Revendications

1. Porte-charge (1) comportant un ensemble d'inclinaison et adapté pour être fixé sur un véhicule, ledit porte-charge (1) comprenant un cadre (2) comportant une première partie (3) raccordée fermement à un moyen de couplage (4) pour la fixation sur le véhicule, une seconde partie (5) raccordée de manière pivotante à ladite première partie (3), ladite seconde partie (5) comprenant des moyens pour porter une charge,
ledit ensemble d'inclinaison comprenant un élément de préhension (7) avec une poignée (20), l'élément de préhension (7) étant agencé mobile sur ladite seconde partie (5) et agencé entre lesdites parties (3, 5),
ledit élément de préhension (7) avec ladite poignée (20) étant adapté pour être déplacé entre une première position de prise, dans laquelle ledit élément de préhension (7) attache lesdites première et seconde parties (3, 5) l'une à l'autre, et une seconde position, dans laquelle lesdites première et seconde parties (3, 5) peuvent être pivotées l'une par rapport à l'autre, permettant audit élément de préhension (7) de porter essentiellement toute la charge de sorte que l'inclinaison peut être effectuée de manière contrôlée quand l'élément de préhension (7) est actionné,
**caractérisé en ce que**
ladite seconde partie (5) comporte une structure consistant en au moins deux tubes parallèles (17a, 17b) qui, dans la première position de prise levée, s'étend de niveau avec ladite première partie (3),
ledit élément de préhension (7) s'étend partiellement entre les deux tubes parallèles (17a, 17b)
ledit élément de préhension (7) comporte un évidement (21) de chaque côté de l'élément de préhension (7), les deux tubes parallèles (17a, 17b) s'étendant à travers ces évidements (21).

2. Porte-charge (1) selon la revendication 1, **caractérisé en ce que** la première partie (3) est constituée d'une structure essentiellement voûtée rectangulaire, qui est ancrée de son côté intérieur (14) sur le moyen de couplage (4) et s'étend depuis celui-ci sur un premier niveau inférieur, en travers d'une première direction.

3. Porte-charge (1) selon la revendication 2, **caractérisé en ce que**, depuis le côté intérieur (14), deux tubes parallèles (15a, 15b) s'étendent en un arc incurvé jusqu'à un second niveau supérieur, conjointement avec ladite première direction.

4. Porte-charge (1) selon la revendication 3, **caractérisé en ce que** les deux tubes parallèles (15a, 15b) sont liés par un côté extérieur (16), qui s'étend sur le niveau inférieur, en travers de ladite première direction.

5. Porte-charge (1) selon la revendication 1, **caractérisé en ce que** ledit élément de préhension (7) peut coulisser dans ladite première direction le long des deux tubes parallèles (17a, 17b).

6. Porte-charge (1) selon la revendication 5, **caractérisé en ce que** les deux tubes parallèles (17a, 17b) comportent un ressort (22) et un moyen de connexion (23), sous la forme d'une tige ou similaire, ledit moyen de connexion (23) étant ancré sur le moyen de préhension (7).

7. Porte-charge (1) selon la revendication 6, **caractérisé en ce que** ledit moyen de connexion (23) se déplace librement le long d'une rainure agrandie (24) conjointement avec les deux tubes parallèles (17a, 17b).

8. Porte-charge (1) selon la revendication 7, **caractérisé en ce que** l'élément de préhension (7) comporte un évidement (25), qui entoure essentiellement le côté extérieur (16) de la première partie (3) du cadre.
